# EUROPÄISCHE PATENTSCHRIFT

(11) **EP 1 493 550 B1**
(45) Veröffentlichungstag und Bekanntmachung des Hinweises auf die Patenterteilung: **02.11.2005**
(21) Anmeldenummer: 03014969.4
(22) Anmeldetag: 01.07.2003
(51) Int. Cl.: B29C 73/08

(54) **Vorrichtung zum Abdichten von Reifen**
Apparatus for sealing tyres
Dispositif d'étanchéité de pneumatiques

(43) Veröffentlichungstag der Anmeldung: 05.01.2005
(73) Patentinhaber: Continental Aktiengesellschaft, 30165 Hannover (DE)
(72) Erfinder: Rubba, Heiko, 31303 Burgdorf (DE); Detering, Rainer, 30926 Seelze (DE); Kaschub, Dirk, 31275 Lehrte (DE); Kreipe, Klaus, 30167 Hannover (DE)

(56) Entgegenhaltungen:
- EP-A- 1 291 158
- WO-A-03/041949
- DE-A- 10 106 468
- DE-A- 19 948 706
- DE-U- 20 212 103
- US-A1- 2003 056 851
- US-B1- 6 283 172
- PATENT ABSTRACTS OF JAPAN vol. 2000, no. 25, 12. April 2001 (2001-04-12) & JP 2001 212883 A (SUMITOMO RUBBER IND LTD), 7. August 2001 (2001-08-07)

## Beschreibung

Die Erfindung betrifft ein System gemäß dem Oberbegriff des Anspruchs 1.

Ein derartiges System ist beispielsweise aus der DE 198 46 451 A1 bekannt. Bei dem aus dieser Druckschrift bekannten System weist die Entnahmevorrichtung eine Standfläche auf, so dass die Entnahmevorrichtung auf dem Boden aufgestellt werden kann. Nachdem die Entnahmevorrichtung auf dem Boden aufgestellt worden ist und der Gaseinlass der Entnahmevorrichtung mit einer Druckluftquelle und der Gasauslass der Entnahmevorrichtung über einen Druckluftschlauch mit dem Reifen eines Kraftfahrzeuges verbunden ist, wird der Behälter mit dem Abdichtmittel auf die Entnahmevorrichtung aufgeschraubt. Während des Aufschraubens wird ein Siegel des Behälters durchstoßen, so dass Druckluft ausgehend von der Druckluftquelle über den Gaseinlass der Entnahmevorrichtung, den Behälterinnenraum und den Gasauslass der Entnahmevorrichtung in den Innenraum des Reifens überführt werden kann. Hierbei mischt sich die Druckluft mit dem Abdichtmittel, so dass ein Loch in dem Reifen abgedichtet werden kann. Das aus der DE 198 46 451 A 1 bekannte System weist den Vorteil auf, dass der Dichtmittelbehälter auf dem Kopf steht, so dass das Abdichtmittel automatisch in die Entnahmevorrichtung und den Gasauslass führt und daher auf einfache Art und Weise mit Hilfe der Druckluft in den Reifen überführt werden kann. Es ist jedoch festzustellen, dass die Standfläche der Entnahmevorrichtung relativ klein ist, so dass der mit der Entnahmevorrichtung verbundene Dichtmittelbehälter leicht umkippen kann. Darüber ist die Entnahmevorrichtung vor äußeren mechanischen Belastungen ungeschützt und insbesondere der empfindliche Gaseinlass und Gasauslass können beschädigt werden.

Aus der EP 12 91 158 A1 ist ein System bekannt, bei dem die Entnahmevorrichtung keine Standfläche aufweist. Vielmehr ist die Entnahmevorrichtung derartig ausgebildet, dass sie in das Gehäuse eines Kompressors eingeschoben werden kann und dann mit diesem formschlüssig verbunden ist. Hierbei steht der auf die Entnahmevorrichtung aufgeschraubte Dichtmittelbehälter ebenfalls auf dem Kopf, so dass sich auch hier die oben genannten Vorteile ergeben. Darüber hinaus ist die gesamte Vorrichtung, bestehend aus der Entnahmevorrichtung und dem Dichtmittelbehälter, gut vor einem Umkippen gesichert, da das gesamte großflächige Kompressorgehäuse als Standfläche für die Entnahmevorrichtung und den Dichtmittelbehälter genutzt wird. Es ist jedoch festzustellen, dass auch bei dem aus der EP 12 91 158 A1 bekannten System die Entnahmevorrichtung vor äußeren mechanischen Einflüssen nicht geschützt ist. Darüber hinaus kann es zusätzlich zu einer Beschädigung der Entnahmevorrichtung bzw. des Kompressorgehäuses kommen, wenn die Entnahmevorrichtung auf dieses aufgeschoben wird.

Aus der DE 10106 468 A1, der DE 202 12 103 U1, der WO 03/041949 A1 und US 2003/0056851 A1 sind Systeme bekannt, bei denen die Entnahmevorrichtung mit der Druckmittelquelle in einem einzigen Gehäuse befindet. Diese Systeme weisen den Nachteil auf, dass das notwendige Wechseln der Entnahmevorrichtung nach einem Gebrauch des Sytems aufwändig ist, da die Entnahmevorrichtung mit dem Gehäuse der Druckmittelquelle fest verbunden ist.

Der Erfindung liegt die Aufgabe zugrunde, ein System der eingangs genannten Art, enthaltend einen Dichtmittelbehälter und eine Entnahmevorrichtung, zu schaffen, bei dem die Ausbildung einer großen Standfläche auf einfache Art und Weise möglich ist und bei dem die Entnahmevorrichtung gut vor äußeren mechanischen Einflüssen geschützt ist.

Die Aufgabe wird durch die Merkmale des Anspruchs 1 gelöst.

Durch den Durchlass in der Hülse wird ein Druckluftschlauch - ausgehend von einer Druckmittelquelle - auf den Gaseinlass und ein weiterer Druckluftschlauch - ausgehend von dem Gasauslass - geführt. Der zweite Druckluftschlauch wird mit dem Ventil eines Kraftfahrzeugreifens verbunden, wenn dieser mit Hilfe der Druckluftquelle aufgepumpt und mit dem Abdichtmittel befüllt werden soll. Vorzugsweise weist die Hülse jeweils einen Durchlass für jeden der zwei genannten Druckluftschläuche auf.

Der innere Aufbau der gezeigten Entnahmevorrichtung ist bekannt und beispielsweise in der DE 198 46 451 A1. (erste Ausführungsform) oder in dem deutschen Gebrauchsmuster 202 11 295.0 (zweite Ausführungsform) gezeigt.

Die mit der Erfindung erzielten Vorteile sind insbesondere darin zu sehen, dass einerseits auf einfache Art und Weise mit Hilfe der Hülse eine großflächige Standfläche ausgebildet werden kann, so dass der Dichtmittelbehälter umkippsicher aufgestellt werden kann, und dass weiterhin die Entnahmevorrichtung gut vor äußeren mechanischen Belastungen geschützt ist, da sie von der Hülse vollständig umfasst ist. Ein weiterer Vorteil der Erfindung ist darin zu sehen, dass die Entnahmevorrichtung unterhalb des Dichtmittelbehälters angeordnet ist und der Dichtmittelbehälter auf dem Kopf steht, so dass das Abdichtmittel auf einfache Art und Weise mit Hilfe einer Druckluftquelle aus dem Dichtmittelbehälter in einen Reifen überführt werden kann. Ein weiterer Vorteil der Erfindung ist schließlich darin zu sehen, dass die Einheit, enthaltend den Dichtmittelbehälter und die Entnahmevorrichtung, als "homogene" Einheit ohne Vorsprünge ausgebildet werden kann. Dies führt dazu, dass die genannte Einheit gut vor mechanischen Belastungen geschützt ist und auf einfache Art und Weise (z.B. in dem Kofferraum eines Kraftffahrzeuges) verstaut werden kann. So ist es möglich, den Dichtmittelbehälter im Wesentlichen als zylindrisch ausgeformte Flasche und die Hülse als Hohlzylinder auszubilden, wobei die zylindrische Flasche und der Hohlzylinder den gleichen Durchmesser aufweisen. In diesem Fall bilden Dichtmittelbehälter und Hülse insgesamt einen zylindrischen Gegenstand, der sich gut verpacken lässt (Näheres siehe Figurenbeschreibung).

Gemäß einer Weiterbildung der Erfindung nach Anspruch 2 ragt die Hülse auf ihrer vom Behälter abgewandten Seite über den untersten Punkt der Entnahmevorrichtung hinaus. Der Vorteil dieser Weiterbildung ist darin zu sehen, dass die Entnahmevorrichtung auch auf ihrer (vom Dichtmittelbehälter abgewandten) Unterseite gut vor mechanischen Belastungen geschützt ist, wenn die Hülse auf den Boden gestellt wird, da sich zwischen der Unterseite der Entnahmevorrichtung und dem Boden ein Spalt ausbildet.

Gemäß einer Weiterbildung der Erfindung nach Anspruch 3 ist der Gasauslass mit einem Schlauch verbunden, der derart um die Entnahmevorrichtung wickelbar ist, dass sich der aufgewickelte Schlauch zwischen Entnahmevorrichtung und Hülse befindet. Ein Vorteil dieser Weiterbildung ist darin zu sehen, dass für den Fall, dass das System nicht benötigt wird, auch der Schlauch durch die Hülse gut vor äußeren mechanischen Belastungen geschützt wird, da er ebenfalls von der Hülse umfasst ist.

Gemäß einer Weiterbildung der Erfindung nach Anspruch 4 weist die Hülse auf ihrer vom Behälter abgewandten Seite einen nach innen gerichteten Rand auf. Ein Vorteil dieser Weiterbildung ist darin zu sehen, dass sich durch den nach innen gerichteten Rand die Aufstandsfläche der Hülse auf dem Boden vergrößert. Ein weiterer Vorteil der Weiterbildung ist darin zu sehen, dass der nach innen gerichtete Rand ein Herausrutschen des auf die Entnahmevorrichtung aufgewickelten Schlauches vermeidet, da sich dieser auf dem Rand ablegt.

Gemäß einer Weiterbildung der Erfindung nach Anspruch 5 weist die Hülse zwei Durchlässe auf, von denen einer gegenüber dem Gaseinlass der Entnahmevorrichtung positioniert ist. Der Vorteil dieser Weiterbildung ist darin zu sehen, dass ein Druckluftschlauch auf einfache Art und Weise durch den Durchlass, der gegenüber dem Gaseinlass der Entnahmevorrichtung liegt, auf den Gaseinlass geführt werden kann, um den Gaseinlass über den Druckluftschlauch mit einer Druckluftquelle zu verbinden. Vorzugsweise ist der Durchlass, der gegenüber dem Gaseinlass der Entnahmevorrichtung positioniert ist, größer als der Durchlass, durch den der Druckluftschlauch für den Gasauslass hindurchgeführt wird, so dass eine einfache Befestigung des Druckluftschlauches auf dem Gaseinlass möglich ist.

Gemäß einer Weiterbildung der Erfindung nach Anspruch 6 ist die Hülse auf den Behälter aufgeschoben. Der Vorteil dieser Weiterbildung ist darin zu sehen, dass für den Fall, dass der Behälter ausgetauscht werden muss, die Hülse von dem auszutauschenden Behälter abgezogen und für den neuen Behälter weiter verwendet werden kann.

Gemäß einer Weiterbildung der Erfindung nach Anspruch 7 ist die Hülse integraler Bestandteil des Behälters. Der Behälter und die Hülse bilden eine einzige stabile Einheit, wobei in diesem Fall auf Grund der Stabilität die von der Hülse umfasste Entnahmevorrichtung besonders gut vor äußeren mechanischen Belastungen geschützt ist, da die Hülse nicht von dem Behälter abrutschen kann.

Gemäß einer Weiterbildung der Erfindung nach Anspruch 8 ist der Durchmesser der Hülse mindestens genauso groß wie der Durchmesser des Behälter an seiner größten Stelle. Der Vorteil dieser Weiterbildung ist darin zu sehen, dass auf diese Art und Weise mit der Hülse eine besonders große von der Hülse umfasste Standfläche gebildet werden kann, so dass einem Umkippen der Hülse sicher vorgebeugt ist.

Gemäß einer Weiterbildung der Erfindung nach Anspruch 9 ist die Hülse mit mindestens einem zusätzlichen nach außen klappbaren Standfuß versehen. Der Vorteil dieser Weiterbildung ist darin zu sehen, dass die Standfläche der Hülse durch einen oder mehrere Standfüße weiter vergrößert werden kann und somit die Kippsicherheit der Hülse nochmals erhöht wird.

Gemäß einer Weiterbildung der Erfindung nach Anspruch 10 weist der Behälter und/oder die Hülse jeweils mindestens ein Mittel auf, das die Eindringtiefe des Behälters in der Hülse begrenzt. Der Vorteil dieser Weiterbildung ist darin zu sehen, dass die Eindringtiefe des Behälters in die Hülse derart beschränkt werden kann, dass die auf den Behälter aufgeschraubte Entnahmevorrichtung nicht in Bodenkontakt kommt und dadurch beschädigt wird.

Gemäß einer Weiterbildung der Erfindung nach Anspruch 11 weist die Hülse mindestens ein Mittel auf, mit dem die Hülse an einem Gehäuse einer Druckmittelquelle befestigbar ist. Der Vorteil dieser Weiterbildung ist darin zu sehen, dass die Standfläche der Hülse, nochmals vergrößert werden kann, da die gesamte Grundfläche des Kompressors als Standfläche genutzt wird. Das Mittel kann z. B. an der äußeren Oberfläche der Hülse als Gewinde vorgesehen sein, über das die Hülse in ein passendes Gewinde im Gehäuse des Kompressors eingeschraubt wird. Es ist ebenfalls möglich, den nach innen gerichteten Rand gemäß Anspruch 4 als entsprechendes Mittel zu nützen und diesen Rand in entsprechende Vorsprünge im Gehäuse des Kompressors "einzudrehen". In diesem Fall wird der zusätzliche Vorteil erreicht, dass die Hülse eine Doppelfunktion übernimmt.

Weitere Vorteile und ein Ausführungsbeispiel der Erfindung werden im Zusammenhang mit den nachstehenden Figuren erläutert, darin zeigt:
- Figur 1: eine Vorrichtung zum Abdichten eines Reifens in Gesamtansicht,
- Figur 2: eine Vorrichtung zum Abdichten eines Reifens in perspektivischer Ansicht,
- Figur 3: eine System zum Abdichten eines Reifens, das an einem Reifen angeschlossen ist,
- Figur 4: ein Kompressorgehäuse in schematischer Darstellung.

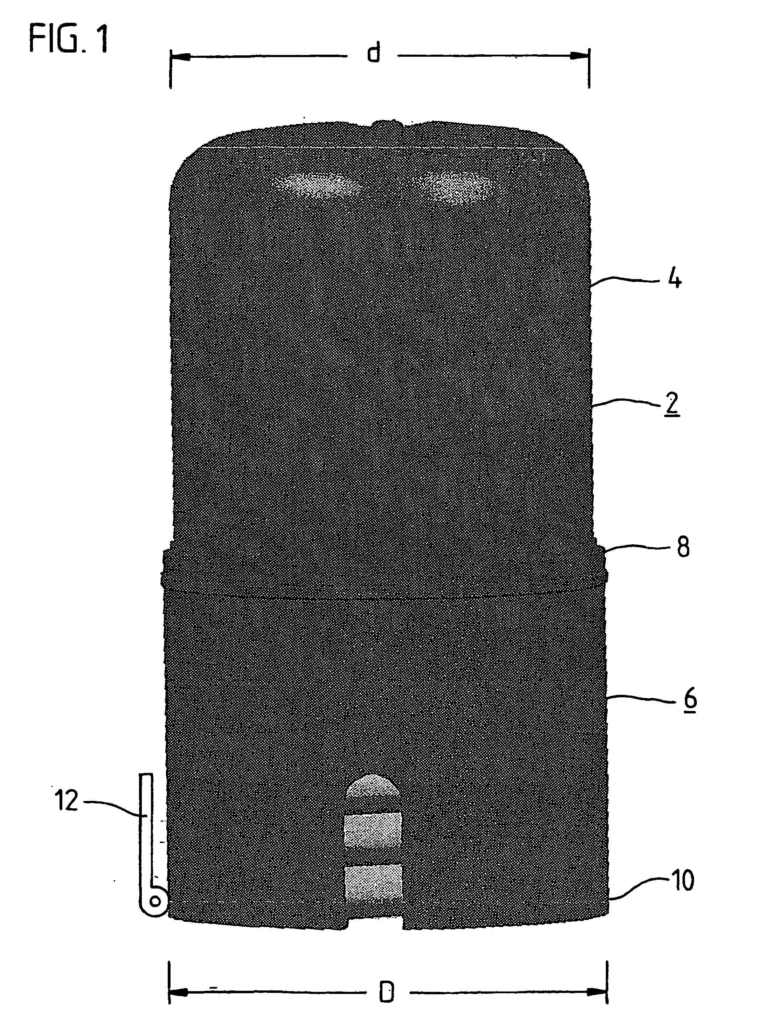

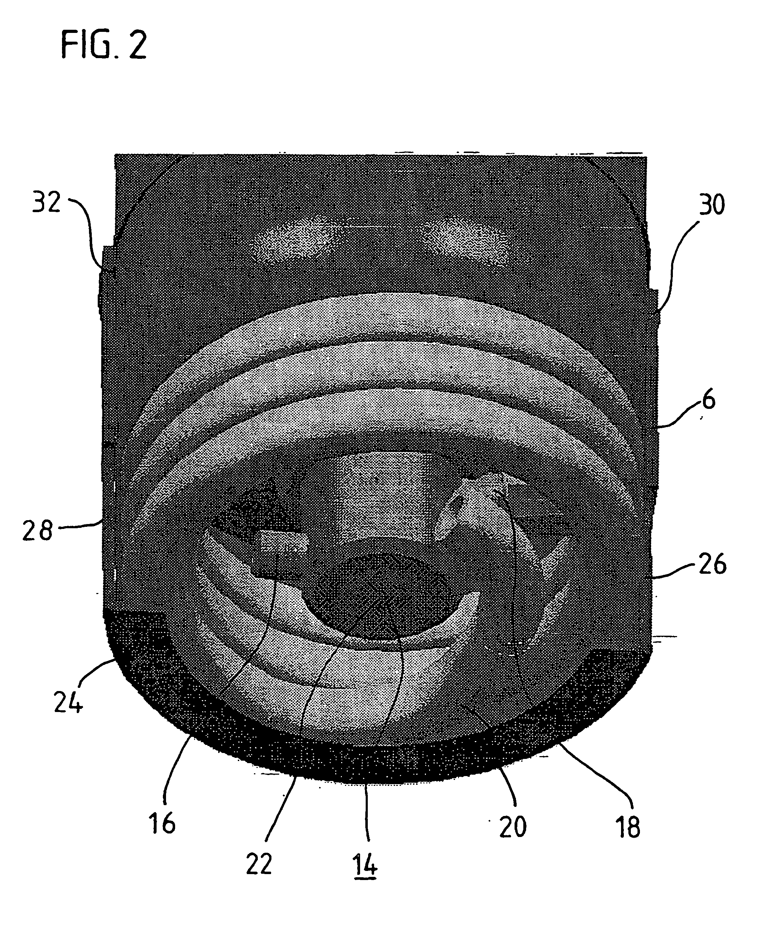

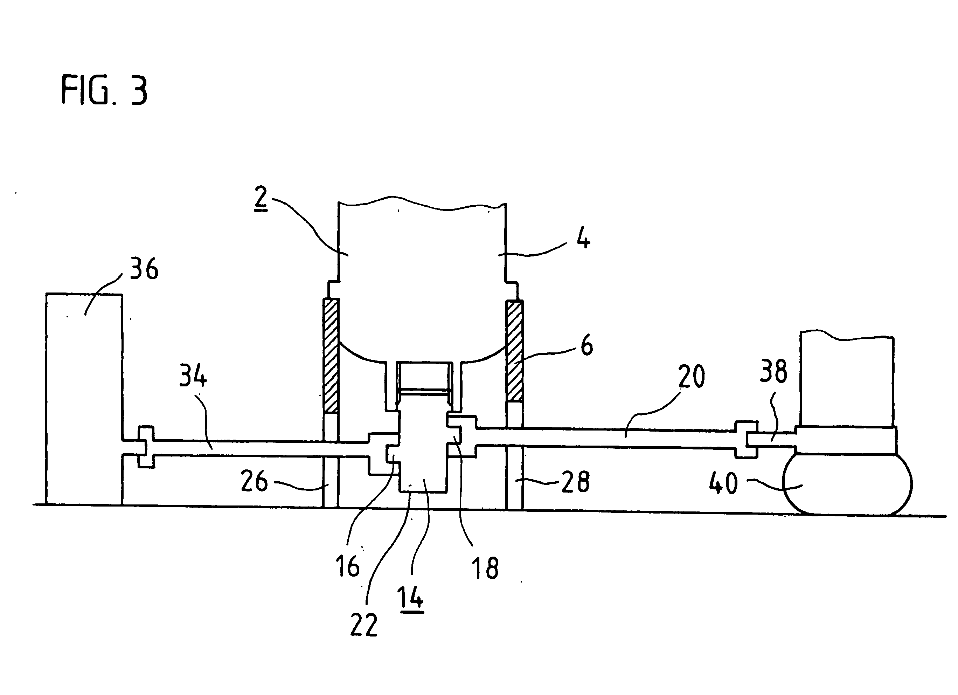

Figur 1 zeigt eine Vorrichtung 2 zum Abdichten aufblasbarer Gegenstände, insbesondere eines Reifens in Gesamtansicht. Die Vorrichtung enthält einen Behälter 4 mit einem Abdichtmittel, der auf eine Hülse 6 aufgesetzt ist. Die Hülse 6 ist an ihrem oberen Ende 8 mit dem Behälter verbunden und das untere Ende 10 der Hülse 6 ist als Standfläche ausgebildet, mit dem die Vorrichtung 2 auf einem (nicht gezeigten) Boden aufgestellt werden kann. Die Hülse 6 ist derartig ausgebildet, dass sie eine (in der Fig. 1 nicht sichtbare) Entnahmevorrichtung vollständig umfasst, so dass diese gut vor äußeren mechanischen Belastungen geschützt ist (siehe auch Figuren 2 und 3). Vorzugsweise ist sowohl die nach radial außen gerichtete Oberfläche des Behälters 4 als auch die Hülse 6 zylindrisch ausgebildet, so dass die gesamte Vorrichtung 2 den in der Figur 1 gezeigten zylindrischen Aufbau aufweist. Vorzugsweise ist der Durchmesser D der Hülse 6 mindestens genauso groß wie der Durchmesser d des Behälters 4 an seiner größten Stelle, so wie es auch in der Fig. 1 gezeigt ist. Durch diesen Aufbau ist eine einfache Verstaubarkeit der Vorrichtung 2 und darüber hinaus eine große Standfläche am unteren Ende 10 der Hülse 6 gewährleistet. Zu weiteren Vergrößerungen der Standfläche kann die Hülse 6 auf ihrer radial nach außen gerichteten Oberfläche mit zusätzlichen nach außen klappbaren Standfüßen 12 versehen sein, die in gleichmäßigen Abständen auf der Hülse 6 verteilt sind.

Figur 2 zeigt einen Teil der Vorrichtung 2 in perspektivischer Ansicht, wobei die Hülse 6 "aufgeschnitten" ist und von schräg unten in diese hineingeschaut wird. Der Figur 2 ist eine Entnahmevorrichtung 14 zu entnehmen, die mit einem Hals des Behälters 4 verbunden, vorzugsweise verschraubt, ist. Die Entnahmevorrichtung 14 weist einen Gaseinlass 16 und Gasauslass 18 auf, wobei der Gaseinlass 16 und Gasauslass 18 über den Behälterinnenraum des Behälters 4 miteinander in Verbindung gebracht werden können. (Innerer Aufbau und Funktionsweise der Entnahmevorrichtung im Einzelnen können z.B. der DE 198 46 451 A1 oder dem deutschen Gebrauchsmuster 202 11 295.0 entnommen werden). Der Gaseinlass 16 kann über einen (nicht gezeigten) Druckluftschlauch mit einer Druckluftquelle (z.B. einem Kompressor) verbunden werden und der Gasauslass 18 kann über einen Druckluftschlauch 20 mit dem aufblasbaren Gegenstand, insbesondere einem Reifen eines Kraftfahrzeuges, verbunden werden.

Die Entnahmevorrichtung 14 wird von der Hülse 6 vollständig umfasst, so dass die Entnahmevorrichtung 14 gut vor äußeren mechanischen Belastungen geschützt ist. Hierbei ragt das untere Ende 10 der Hülse 6 über den Boden 22 der Entnahmevorrichtung 14 hinaus. Der Druckluftschlauch 20 kann derart um die Entnahmevorrichtung 14 gewickelt werden, dass er sich zwischen der Entnahmevorrichtung 14 und der Hülse 6 befindet, so wie es auch in der Figur 2 gezeigt ist. Die während des Aufwickelns in dem Druckluftschlauch 20 aufgebauten Rückstellkräfte führen dazu, dass der Druckluftschlauch 20 in Anlage zu der radial inneren Oberfläche der Hülse 6 kommt. Ein an dem unteren Ende 10 der Hülse 6 befestigter umlaufender nach radial innen gerichteter Rand 24 dient der Ablage des Druckluftschlauches 20 innerhalb der Hülse 6, so dass dieser nicht nach unten aus der Hülse 6 herausrutschen kann. Die Hülse 6 enthält zwei Durchlässe 26, 28 in Form von "Toren", wobei durch den Durchlass 28 ein Druckluftschlauch auf den Gaseinlass 16 und durch den Durchlass 26 der Druckluftschlauch 20 vom Gasauslass 18 nach außen geführt werden kann. Der Durchlass 28 ist gegenüber dem Gaseinlass 16 und der Durchlass 26 ist gegenüber dem Gasauslass 18 positioniert, so dass eine einfache Befestigung der entsprechenden Druckluftschläuche auf dem Gaseinlass 16 bzw. dem Gasauslass 18 möglich ist.

Der Figur 2 ist ferner zu entnehmen, dass der Behälter 4 in die Hülse 6 eingeschoben ist, wobei der Behälter 4 zur sicheren Positionierung innerhalb der Hülse 6 eine umlaufende Nut 30 aufweisen kann, die während des Einschiebens in eine entsprechende Rinne 32 des Behälters einrastet. Hierdurch wird sichergestellt, dass der Behälter 4 nicht zu tief in die Hülse 6 eingeschoben wird. Alternativ ist es möglich, ausschließlich eine umlaufende Nut 30 auf dem Behälter 4 vorzusehen, die während des Einschiebens des Behälters 4 in die Hülse 6 zur Auflage auf der oberen Kante der Hülse 6 gelangt, so dass ein weiteres Einschieben nicht möglich ist.

Figur 3 zeigt die Vorrichtung 2 in schematischer Darstellung, wobei die Hülse 6 im Schnitt gezeigt ist. Auf Grund der Schnittdarstellung der Hülse 6 ist die von der Hülse 6 umfasste Entnahmevorrichtung 14 mit dem Gaseinlass 16 und dem Gasauslass 18 zu sehen, wobei zwischen dem Boden 22 der Entnahmevorrichtung 14 und dem Boden, auf dem die Vorrichtung 2 steht, bei dem gezeigten Ausführungsbeispiel ein Spalt verbleibt. Der Gaseinlass 16 ist durch den Durchlass 26 hindurch über einen Druckluftschlauch 34 mit einem Kompressor 36 verbunden und der Gasauslass 18 ist über den Druckluftschlauch 20, der durch den Durchlass 28 geführt ist, mit dem Ventil 38 eines Reifens 40 verbunden. Mit Hilfe des Kompressors 36 kann Druckluft über den Druckluftschlauch 34 und die Entnahmevorrichtung 14 in das Innere des Behälters 4 überführt werden. Ausgehend von dem Innenraum des Behälters 4 wird über die Entnahmevorrichtung 14, den Gasauslass 18 und den Druckluftschlauch 20 ein Gemisch von Dichtmittel und Druckluft über das Ventil 38 in das Innere des Reifens 40 überführt, so dass ein Loch innerhalb des Reifens 40 geflickt und der Reifen 40 mit Druckluft aufgefüllt werden kann.

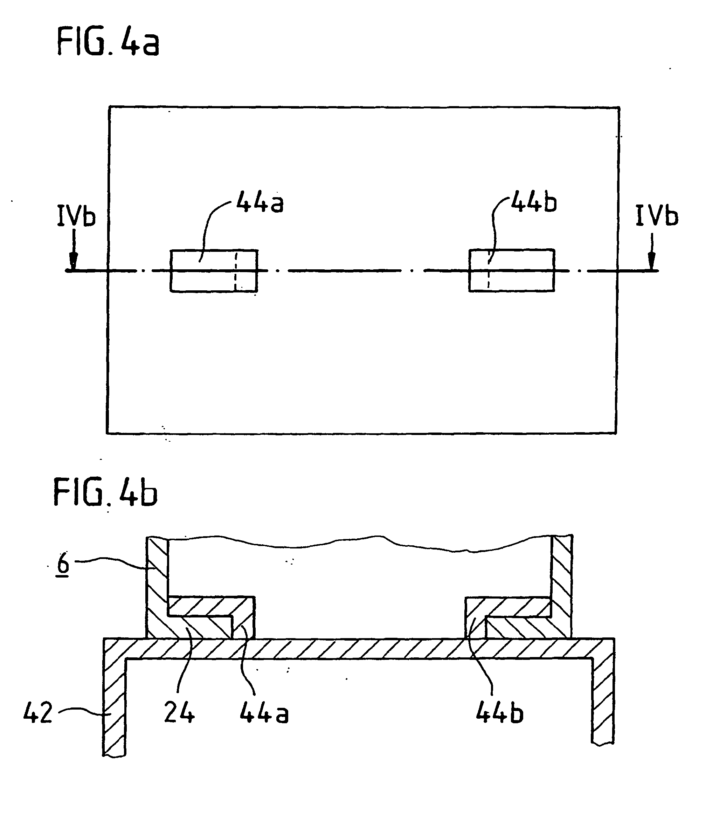

Figur 4a zeigt in schematischer Darstellung ein Kompressorgehäuse 42 in Draufsicht. Das Kompressorgehäuse 42 enthält Anschlusselemente 44a und 44b, an die die Hülse 6 der in der Figur 1 gezeigten Vorrichtung angeschlossen werden kann. Um die in der Figur 1 gezeigte Vorrichtung an dem Gehäuse 42 des Kompressors zu befestigen, wird die Hülse 6 der Vorrichtung derartig auf das Kompressorgehäuse 42 aufgesetzt, dass die beiden diametral gegenüber liegenden Durchlässe 26 und 28 in der Hülse (s. Figur 2) über den Anschlusselementen liegen (d. h. die Anschlusselemente 44a und 44b "liegen in den Durchlässen 26 und 28"). Vor dem Aufsetzen der Hülse 6 auf dem Gehäuse 42 des Kompressors werden die dann bereits an die Entnahmevorrichtung 14 angeschlossenen Druckluftschläuche 34 und 20 durch die Durchlässe 26 und 28 geführt, so wie es auch in der Figur 3 gezeigt ist. Nach dem Aussetzen der Hülse 6 in der genannten Art und Weise auf dem Gehäuse 42 des Kompressors wird die Hülse 6 derartig verdreht, dass die Durchlässe 26 und 28 nicht mehr über den Anschlusselementen 44a und 44b liegen. Die Verdrehung erfolgt um einen Winkel, der sicherstellt, dass der nach radial innen gerichtete Rand 24 der Hülse 6 (s. Figur 2) unter die Anschlusselemente 44a und 44b greift.

Figur 4b ist ein Schnitt entlang der in der Figur 4a strichliniert eingezeichneten Linie IV b/IV b. Der Figur 4b ist zu entnehmen, dass die Anschlusselemente 44a und 44b die Form von "rechtwinkligen Winkeln" aufweisen, die derart auf das Gehäuse 42 aufgesetzt sind, dass zwischen den Gehäuseoberflächen und den Winkeln ein Spalt verbleibt. In diesen Spalt wird die Hülse 6 "eingedreht", so dass die Hülse 6 und damit die in der Figur 1 gezeigte Vorrichtung fest mit dem Gehäuse 42 des Kompressors verbunden ist.

### Bezugszeichenliste

### (Teil der Beschreibung)

- 2: Vorrichtung
- 4: Behälter
- 6: Hülse
- 8: oberes Ende der Hülse
- 10: unteres Ende der Hülse
- 12: Standfuß
- 14: Entnahmevorrichtung
- 16: Gaseinlass
- 18: Gasauslass
- 20: Druckluftschlauch
- 22: Boden der Entnahmevorrichtung
- 24: Rand
- 26, 28: Durchlass
- 30: Nut
- 32: Rinne
- 34: Druckluftschlauch
- 36: Kompressor
- 38: Ventil
- 40: Reifen
- 42: Kompressorgehäuse
- 44a, 44b: Anschlusselement

## Patentansprüche

1. System zum Abdichten aufblasbarer Gegenstände, insbesondere Reifen (40), mit
- einer Druckmittelquelle (36), die in einem Gehäuse (42) angeordnet ist
- einem Behälter (4), der ein Abdichtmittel enthält,
- einer Entnahmevorrichtung (14), die außerhalb des Gehäuses (42) angeordnet ist und die mit dem Behälter (4) verbunden ist und die einen Gaseinlass (16) und einen Gasauslass (18) aufweist, wobei der Gaseinlass (16) und der Gasauslass (18) über den Behälterinnenraum in Verbindung bringbar sind,
- einem Druckluftschlauch (34), der von der Druckmittelquelle (36) auf den Gaseinlass (16) geführt wird,
- einem weiteren Druckluftschlauch (20), der von dem Gasauslass (18) ausgeht,
**dadurch gekennzeichnet, dass** das System eine Hülse (6) aufweist, die
- einerseits mit dem Behälter (4) verbunden ist und andererseits als Standfläche ausgebildet ist und
- die Entnahmevorrichtung (14) vollständig umfasst und einen Durchlass (26) aufweist, durch den der Druckluftschlauch (34) auf den Gaseinlass (16) und einen Durchlass (28) aufweist, durch den der weitere Druckluftschlauch (20) geführt wird.

2. System nach Anspruch 1, **dadurch gekennzeichnet, dass** die Hülse (6) auf ihrer vom Behälter (4) abgewandten Seite über den untersten Punkt (22) der Entnahmevorrichtung (14) hinausragt.

3. System nach einem der Ansprüche 1 bis 2, **dadurch gekennzeichnet, dass** der Gasauslass (18) mit einem Schlauch (20) verbunden ist, der derart um die Entnahmevorrichtung (14) wickelbar ist, dass der aufgewickelte Schlauch (20) sich zwischen Entnahmevorrichtung (14) und Hülse (6) befindet.

4. System nach einem der Ansprüche 1 bis 3, **dadurch gekennzeichnet, dass** die Hülse (6) auf ihrer vom Behälter (4) abgewandten Seite einen nach innen gerichteten Rand (24) aufweist.

5. System nach einem der Ansprüche 1 bis 4, **dadurch gekennzeichnet, dass** die Hülse (6) zwei Durchlässe (26,28) aufweist, von denen einer gegenüber dem Gaseinlass (16) der Entnahmevorrichtung (14) positioniert ist.

6. System nach einem der Ansprüche 1 bis 5, **dadurch gekennzeichnet, dass** die Hülse (6) auf den Behälter (4) aufgeschoben ist.

7. System nach einem der Ansprüche 1 bis 5, **dadurch gekennzeichnet, dass** die Hülse (6) integraler Bestandteil des Behälters (4) ist.

8. System nach einem der Ansprüche 1 bis 7, **dadurch gekennzeichnet, dass** der Durchmesser der Hülse (6) mindestens genauso groß ist wie der Durchmesser des Behälters (4) an seiner größten Stelle.

9. System nach einem der Ansprüche 1 bis 8, **dadurch gekennzeichnet, dass** die Hülse (6) mit mindestens einem zusätzlichen nach außen klappbaren Standfuss (12) versehen ist.

10. System nach einem der Ansprüche 1 bis 9, **dadurch gekennzeichnet, dass** der Behälter (4) und/ oder die Hülse (6) jeweils mindestens ein Mittel (30,32) aufweist, das die Eindringtiefe des Behälters (4) in der Hülse (6) begrenzt.

11. System nach einem der Ansprüche 1 bis 10, **dadurch gekennzeichnet, dass** die Hülse mindestens ein Mittel (24) aufweist, mit dem die Hülse (6) an einem Gehäuse (42) einer Druckmittelquelle befestigbar ist.

## Claims

1. System for sealing inflatable articles, in particular tyres (40), with
- a pressure medium source (36), which is arranged in a housing (42),
- a container (4), which contains a sealing means,
- a removal device (14), which is arranged outside the housing (42), is connected to the container (4) and has a gas inlet (16) and a gas outlet (18), the gas inlet (16) and the gas outlet (18) being able to be brought into connection with the interior space of the container,
- a compressed air hose (34), which is led from the pressure medium source (36) to the gas inlet (16),
- a further compressed air hose (20), which extends from the gas outlet (18),
**characterized in that** the system has a sleeve (6), which
- on the one hand is connected to the container (4) and on the other hand is formed as a standing area and
- completely encloses the removal device (14) and has a passage (26), through which the compressed air hose (34) is led to the gas inlet (16), and a passage (28), through which the further compressed air hose (20) is led.

2. System according to Claim 1, **characterized in that**, on its side facing away from the container (4), the sleeve (6) protrudes beyond the lowermost point (22) of the removal device (14).

3. System according to either of Claims 1 and 2, **characterized in that** the gas outlet (18) is connected to a hose (20), which can be wound around the removal device (14) in such a way that the wound-on hose (20) is between the removal device (14) and the sleeve (6).

4. System according to one of Claims 1 to 3, **characterized in that**, on its side facing away from the container (4), the sleeve (6) has an inwardly directed rim (24).

5. System according to one of Claims 1 to 4, **characterized in that** the sleeve (6) has two passages (26, 28), one of which is positioned opposite the gas inlet (16) of the removal device (14).

6. System according to one of Claims 1 to 5, **characterized in that** the sleeve (6) is pushed onto the container (4).

7. System according to one of Claims 1 to 5, **characterized in that** the sleeve (6) is an integral part of the container (4).

8. System according to one of Claims 1 to 7, **characterized in that** the diameter of the sleeve (6) is at least just as large as the diameter of the container (4) at its greatest point.

9. System according to one of Claims 1 to 8, **characterized in that** the sleeve (6) is provided with at least one additional standing foot (12) which can be swung outwards.

10. System according to one of Claims 1 to 9, **characterized in that** the container (4) and/or the sleeve (6) respectively has at least one means (30, 32) which limits the depth of penetration of the container (4) into the sleeve (6).

11. System according to one of Claims 1 to 10, **characterized in that** the sleeve has at least one means (24) with which the sleeve (6) can be fastened to a housing (42) of a pressure medium source.

## Revendications

1. Système d'étanchéification d'objets gonflables, notamment de pneumatiques (40), comprenant :
- une source de fluide sous pression (36), qui est disposée dans un boîtier (42),
- un récipient (4) qui contient un fluide d'étanchéité,
- un dispositif de prélèvement (14) qui est disposé en dehors du boîtier (42) et qui est connecté au récipient (4) et présente une entrée de gaz (16) et une sortie de gaz (18), l'entrée de gaz (16) et la sortie de gaz (18) pouvant être amenées en liaison par le biais de l'espace interne du récipient,
- un tuyau flexible d'air sous pression (34), qui est guidé de la source de fluide sous pression (36) jusqu'à l'entrée de gaz (16),
- un tuyau flexible d'air sous pression supplémentaire (20), qui part de la sortie de gaz (18),
**caractérisé en ce que** le système présente une gaine (6) qui
- d'une part est reliée au récipient (4) et d'autre part est réalisée sous forme de surface de support et
- entoure complètement le dispositif de prélèvement (14) et présente un passage (26), à travers lequel le tuyau flexible d'air sous pression (34) est guidé jusqu'à l'entrée de gaz (16) et un passage supplémentaire (28), à travers lequel le tuyau flexible d'air sous pression supplémentaire (20) est guidé.

2. Système selon la revendication 1, **caractérisé en ce que** la gaine (6) fait saillie sur son côté opposé au récipient (4) au-delà du point inférieur (22) du dispositif de prélèvement (14).

3. Système selon l'une quelconque des revendications 1 à 2, **caractérisé en ce que** la sortie de gaz (18) est reliée à un tuyau flexible (20) qui peut être enroulé autour du dispositif de prélèvement (14) de telle sorte que le tuyau flexible enroulé (20) se trouve entre le dispositif de prélèvement (14) et la gaine (6).

4. Système selon l'une quelconque des revendications 1 à 3, **caractérisé en ce que** la gaine (6) présente, sur son côté opposé au récipient (4), un bord (24) orienté vers l'intérieur.

5. Système selon l'une quelconque des revendications 1 à 4, **caractérisé en ce que** la gaine (6) présente deux passages (26, 28) dont l'un est positionné en face de l'entrée de gaz (16) du dispositif de prélèvement (14).

6. Système selon l'une quelconque des revendications 1 à 5, **caractérisé en ce que** la gaine (6) est poussée sur le récipient (4).

7. Système selon l'une quelconque des revendications 1 à 5, **caractérisé en ce que** la gaine (6) fait partie intégrante du récipient (4).

8. Système selon l'une quelconque des revendications 1 à 7, **caractérisé en ce que** le diamètre de la gaine (6) est au moins aussi grand que le diamètre du récipient (4) au niveau de sa partie la plus grande.

9. Système selon l'une quelconque des revendications 1 à 8, **caractérisé en ce que** la gaine (6) est pourvue d'au moins un pied de support (12) supplémentaire rabattable vers l'extérieur.

10. Système selon l'une quelconque des revendications 1 à 9, **caractérisé en ce que** le récipient (4) et/ou la gaine (6) présente(nt) à chaque fois au moins un moyen (30, 32) qui limite la profondeur de pénétration du récipient (4) dans la gaine (6).

11. Système selon l'une quelconque des revendications 1 à 10, **caractérisé en ce que** la gaine présente au moins un moyen (24) avec lequel la gaine (6) peut être fixée sur un boîtier (42) d'une source de fluide sous pression.
